Europäisches Patentamt

European Patent Office

Office européen des brevets

(19)

(11) Publication number: **0 018 640**
**B1**

(12) EUROPEAN PATENT SPECIFICATION

(45) Date of publication of patent specification: **25.05.83**

(21) Application number: **80102359.9**

(22) Date of filing: **30.04.80**

(51) Int. Cl.³: **C 08 L 33/00,**
**C 08 L 51/04, C 08 L 51/00,**
**C 08 F 8/32**

(54) Impact modified polyglutarimide compositions and methods of making them.

(30) Priority: **07.05.79 US 36951**

(43) Date of publication of application:
**12.11.80 Bulletin 80/23**

(45) Publication of the grant of the patent:
**25.05.83 Bulletin 83/21**

(84) Designated Contracting States:
**BE CH DE FR GB IT LI NL SE**

(56) References cited:
**EP - A - 0 013 485**
**FR - A - 2 330 700**
**FR - A - 2 393 818**

(73) Proprietor: **Rohm and Haas Company**
**Independence Mall West**
**Philadelphia, Pennsylvania 19105 (US)**

(72) Inventor: **Weese, Richard Henry**
**R.R.1 Glenwood Drive**
**Washington Crossing, Pa. 18977 (US)**
Inventor: **Yarnell, Thomas Michael**
**1721 Crestview Avenue**
**Willow Grove Pa. 19090 (US)**

(74) Representative: **Deufel, Paul, Dr. et al,**
**Patentanwälte Müller-Boré, Deufel Schön, Hertel**
**Siebertstrasse 4 Postfach 860720**
**D-8000 München 86 (DE)**

Impact modified polyglutarimide compositions and methods of making them

This invention is concerned with impact modified polyglutarimide compositions and methods of making them.

The field of the invention is the impact modification of polyglutarimides.

European Patent Application No. 79302791.3 describes polyglutarimide compositions containing, as impact modifier a combination of a butadiene based or an acrylic based multiple stage polymer, together with certain levels of polycarbonate. We have now found a composition wherein even further improvement of impact strength properties in polyglutarimides can be achieved.

The invention comprises a blend of (a) polyglutarimide, (b) at least two multiple stage polymer impact modifiers, said impact modifiers having rubbery cores and hard polymer shells, at least one of said impact modifiers having a core polymerized predominantly from butadiene and the second of said impact modifiers having a core polymerized predominantly from $C_2$—$C_6$ alkyl acrylate and (c) polycarbonate.

The polyglutarimides useful in this invention are any known in the art but those of Belgian Patent 848,486 are so superior to any other known to us that they are greatly preferred.

The preferred glutarimide polymers are those which have been prepared from acrylic polymers such as poly (methyl methacylate) and copolymers thereof by reaction in accordance with the aforementioned Belgian Patent with ammonia or methylamine so that 1 to 100% preferably 50 to 92% of the acrylic ester groups are imidized. The optimum results are obtained with degrees of imidization of about 20 to 100%. The weight average molecular weights of the preferred glutarimide polymers are typically 100,000 to 200,000.

In this invention, both butadiene and acrylic based multiple stage polymers are necessary, and this is contrary to the prior art such as the European Patent Application referred to above.

The butadiene based multiple stage polymer can be an MBS (methacrylate-butadiene-styrene) type or an ABS (acrylonitrile-butadiene-styrene) type. For example multiple stage polymers having a butadiene-styrene first stage, a styrene second stage, and a methyl methacrylate-styrene final stage or an acrylonitrile final stage can be used. The preferred maximum amount of non-butadiene units, particularly styrene and/or acrylonitrile units, in the core stage is 30% by weight.

The acrylic based multiple stage polymer can have a cross-linked butyl acrylate first stage and a methacrylate, styrene and/or acrylonitrile, usually methyl methacrylate, final stage. The preferred maximum amount of non-$C_2$—$C_6$ (alkyl) acrylate units, particularly cross-linker and/or graftlinker, units in the acrylate core is 5% by weight.

The final stage or stages of the multiple stage polymers are preferably polymerized from methyl methacrylate, or blends of methyl methacrylate with other monomers such as styrene and/or acrylonitrile.

Ratios of rubber stage to hard stage can be varied from about 1:1 to about 9:1 by weight.

One suitable way to prepare the two multiple stage polymers is to polymerize the final stage or later stages in the presence of a mixture of the butyl acrylate first stage and the butadiene-styrene first stage, and coisolating the resultant mixture of multiple stage polymers.

Suitable total amounts of multiple stage polymers are typically about 5 to 40% by weight, based on the blend of the multiple stage polymers, polyglutarimide and polycarbonate. Preferably, the multiple stage polymers constitute about 15 to 35% by weight of this blend.

From another aspect, preferred amounts of each of the impact modifiers and of the polycarbonate are 1 to 100 parts by weight per 100 parts by weight of polyglutarimide.

Polycarbonates are present in the blend for further enhancement of impact properties. The polycarbonates which are preferably employed are those having a molecular weight (number average) of about 20,000 to 1 million, preferably 20,000 to 40,000. The suitable polycarbonates are commercial materials.

The polyglutarimide, multiple stage polymers, and polycarbonate may be blended by melting to form an alloy. Generally, the ingredients are dry blended with suitable stabilizers, pigments, fillers reinforcing agents or other additives, and then the blend is extruded at an elevated temperature, for example 232 to 288°C and the resultant melt blend can either be fed directly to an injection molding machine, or cooled and granulated for subsequent processing.

Thus the compositions of the invention are useful *inter alia* as molding or other forming compositions.

The following examples in which all parts and percentages are by weight unless otherwise indicated are presented to illustrate a few preferred embodiments of the invention.

Examples

In these Examples, the compositions were prepared by dry blending the ingredients with suitable lubricants and stabilizers and compounding on a 2,54 cm Killion extruder at 246 to 288°C, and injection molding on a Newbury injection molding machine. Physical properties were assessed by standard ASTM procedures.

Examples 1 to 6

The following ingredients were blended in the ratios indicated in Table 1 and the physical properties were tested, with results also indicated in Table 1. The polyglutarimide was prepared in accordance with Belgian Patent 848,486 from a methyl methacrylate polymer to a degree of imidization of 88 to 92%. The butadiene-based multiple stage polymer had as a first stage a copolymer of butadiene and styrene, a second stage of styrene and a final stage copolymer of methyl methacrylate, acrylonitrile and styrene with a weight ratio of 73.63/3.87//11.01//3.83/3.83/3.83 (double slashes separate stages, single slashes separate monomers in same stage). The all acrylic multiple stage polymer had a first stage of butyl acrylate crosslinked with 1% butylene glycol diacrylate, and 20% (of the total polymer) of a final stage of poly(methyl methacrylate). The polycarbonate was Mobay "Merlon M-50". The results of these experiments are reported in Table I and show the synergistic results achieved in the balance of impact properties by using a combination of both butadiene-based and all acrylic multiple stage polymers.

Examples 7 to 10

This series of experiments shows the effect of reducing the polycarbonate content when substituting a blend of impact modifiers for each of the impact modifiers used separately. The materials used in Examples 7 to 10 are the same as those used in Examples 1 to 6, except that the butadiene based impact modifier has the following composition: butadiene/styrene/-/styrene/acrylonitrile/methyl methacrylate of the weight ratio 73.63/3.87//14.84/3.83/3.83. The results are reported in Table 2.

Examples 11 and 12

In this series of experiments the same materials as were used in Examples 1 to 6 were used but the ratio of the two modifiers was varied. The results are reported in Table III.

Example 13

In this Example, the procedure of Examples 7 to 10 was followed except that the modifier system was prepared by polymerizing 25 parts methyl methacrylate onto 75 parts of a 50/50 mixture of butyl acrylate rubber cross-linked with 1% of butylene glycol diacrylate and butadiene-styrene 95/5 rubber. The ratios of components were 55.5 parts polyglutarimide, 32.0 parts of the above-mentioned modifier system, and 12.5 parts polycarbonate; the properties are reported in Table II.

## TABLE I

| | Comparative example 1 | Comparative example 2 | Example 3 | Comparative example 4 | Comparative example 5 | Example 6 |
|---|---|---|---|---|---|---|
| a | 45 | 45 | 45 | 48 | 48 | 48 |
| b | 35 | — | 17.5 | 35 | — | 17.5 |
| c | — | 35 | 17.5 | — | 35 | 17.5 |
| d | 20 | 20 | 20 | 17 | 17 | 17 |
| e | 1.6 (3.0) | 2.19 (4.1) | 2.35 (4.4) | 1.6 (3.0) | 1.44 (2.7) | 2.19 (4.1) |
| f | 9.04 (80) | 6.78 (60) | 18.19 (161) | 8.25 (73) | 4.52 (40) | 10.28 (91) |
| g | 89 | 96 | 120 | 112 | 61 | 103 |
| h | 26 | 31 | 45 | 17 | 22 | 24 |

Composition
- a=Polyglutarimide
- b=Butadiene-Based Multiple Stage Polymer
- c=All-Acrylic Multiple Stage Polymer
- d=Polycarbonate
- e=Notched Izod Impact, 0.32 cm (1/8"), J/cm (ft-lbs/in)
- f=Gardner Impact (VHIT) J(in-lbs)
- g=Tensile Impact
- h=Elongation, %

TABLE II

| | Comparative example 7 | Comparative example 8 | Example 9 | Example 10 | Example 13 |
|---|---|---|---|---|---|
| a | 45 | 45 | 50 | 55 | 55.5 |
| b | 35 | — | 17.5 | 17.5 | 16.0 |
| c | — | 35 | 17.5 | 17.5 | 16.0 |
| d | 20 | 20 | 15 | 10 | 12.5 |
| e | 1.6 (3.0) | 2.19 (4.1) | 2.08 (3.9) | 1.6 (3.0) | 1.76 (3.3) |
| f | 9.04 (80) | 6.78 (60) | 36.2 (320) | 36.2 (320) | 28.25 (250) |
| g | — | — | 6095 | 6980 | 7190 |
| | 7300 | 6900 | 6110 | 5890 | 7140 |
| h | 2.83 | 2.90 | 2.80 | 3.35 | 3.20 |
| i | 26 | 31 | 34 | 20 | 48 |

Composition
a=Polyglutarimide
b=Butadiene-Based Impact Modifier
c=All-Acrylic Impact Modifier
d=Polycarbonate
e=Notched Izod Impact, 0.32 cm (1/8"), J/cm (ft-lbs/in)
f=Gardner Impact (VHIT) J(in-lbs)
g=Tensile Strength at Yield
          at Break
h=Tensile Modulus$\times 10^5$
i=Elongation, % at Break

TABLE III

| Composition composition | Example 11 | Example 12 |
|---|---|---|
| Polyglutarimide | 45 | 50 |
| Butadiene-Based Impact Modifier | 10.5 | 24.5 |
| All-Acrylic Impact Modifier | 24.5 | 10.5 |
| Polycarbonate | 20 | 15 |
| Notched Izod Impact, 0.32cm (1/8"), J/cm (ft-lbs/in) | 2.78 (5.2) | 1.81 (3.4) |
| Gardner Impact (VHIT), J(in-lbs) | 13.67 (121) | 21.58 (191) |

## Claims

1. A composition comprising (a) polyglutarimide, (b) at least two multiple stage polymer impact modifiers, said impact modifiers having rubbery cores and hard polymer shells, at least one of said impact modifiers having a core polymerized predominantly from butadiene and at least one other having a core polymerized predominantly from $C_2$—$C_6$ alkyl arcylate and (c) polycarbonate.

2. A composition as claimed in claim 1 wherein the hard polymer shells of at least one of each of said impact modifiers comprises methacrylate, styrene and/or acrylonitrile units.

3. A composition as claimed in any preceding claim, wherein each of said impact modifiers is present in an amount of 1 to 100 parts by weight per 100 parts polyglutarimide.

4. A composition as claimed in claim 3 containing 1 to 100 parts by weight of polycarbonate.

5. A composition as claimed in any preceding claim wherein said polycarbonate has a molecular weight of 20,000 to 40,000, number average.

6. A composition as claimed in any preceding claim wherein said polyglutarimide comprises imidized polymer or copolymer of methyl methacrylate, and 50 to 92%, by mole, of the methacrylate groups are imidized.

7. A method of improving the impact resistance of polyglutarimide which comprises blending therewith (a) at least two multiple stage polymer impact modifiers, said impact modifiers having rubbery cores and hard polymer shells, at least one of said impact modifiers having a core polymerized predominantly from butadiene and at least one other having a core polymerized predominantly from $C_2$—$C_6$ alkyl acrylate and (b) polycarbonate.

8. A method as claimed in claim 7 as applied to the preparation of a composition as claimed in any of claims 2 to 6.

## Revendications

1. Composition comprenant (a) du polyglutarimide, (b) au moins deux modificateurs de choc constitués d'un polymèrs multi-étagé, lesdits modificateurs de choc ayant des noyaux caoutchouteux et des enveloppes polymères dures, au moins un desdits modificateurs de choc ayant un noyau polymérisé de façon prédominante à partir de butadiène et au moins un autre ayant un noyau polymérisé de façon prédominante à partir d'acrylate d'alcoyle (en $C_2$—$C_6$) et (c) de polycarbonate.

2. Composition selon la revendication 1, dans laquelle les enveloppes polymères dures d'au moins un de chacun desdits modificateurs de choc comprennent des motifs de méthacrylate, de styrène et/ou d'actylonitrile.

3. Composition selon l'une quelconque des revendications précédentes, dans laquelle chacun desdits modificateurs de choc est présent en une quantité de 1 à 100 parties en poids pour 100 parties de polyglutarimide.

4. Composition selon la revendication 3 contenant 1 à 100 parties en poids de polycarbonate.

5. Composition selon l'une quelconque des revendications précédentes, dans laquelle ledit polycarbonate a une moyenne numérique du poids moléculaire de 20 000 à 40 000.

6. Composition selon l'une quelconque des revendications précédentes, dans laquelle ledit polyglutarimide comprend un polymère ou copolymère imidé de méthacrylate de méthyle et 50 à 92% en moles des groupes méthacrylates sont imidés.

7. Procédé pour améliorer la résistance au choc du polyglutarimide qui comprend le mélange avec celui-ci de (a) au moins deux modificateurs de chocs constitués d'un polymère multi-étagé, lesdits modificateurs de choc ayant des noyaux caoutchouteux et des enveloppes polymères dures, au moins un desdits modificateurs de choc ayant un noyau polymérisé de façon prédominante à partir de butadiène et au moins un autre ayant un noyau polymérisé de façon prédominante à partir d'acrylate d'alcoyle en $C_2$—$C_6$ et (b) de polycarbonate.

8. Procédé selon la revendication 7 appliqué à la préparation d'une composition comme revendiqué selon l'une quelconque des revendications 2 à 6.

**Patentansprüche**

1. Masse aus (a) Polyglutarimid, (b) wenigstens zwei Vielstufen-Polymerschlagmodifizie-rungsmittel, wobei die Schlagmodifizierungs-mittel kautschukartige Kerne und harte Polymerschalen aufweisen, wenigstens eines der Schlagmodifizierungsmittel einen Kern, der überwiegend aus Butadien polymerisiert worden ist, besitzt und wenigstens ein anderes Schlagmodifizierungsmittel einen Kern aufweist, der überwiegend aus einem $C_2$—$C_6$-Alkylacrylat polymerisiert worden ist, und (c) einem Polycarbonat.

2. Masse nach Anspruch 1, dadurch gekennzeichnet, daß die harten Polymerschalen wenigstens eines der Schlagmodifizierungsmittel aus Methacrylat-, Styrol- und/oder Acrylnitrileinheiten bestehen.

3. Masse nach einem der vorhergehenden Ansprüche, dadurch gekennzeichnet, daß jedes der Schlagmodifizierungsmittel in einer Menge von 1 bis 100 Gew.-Teilen pro 100 Teilen Polyglutarimid vorliegt.

4. Masse nach Anspruch 3, dadurch gekennzeichnet, daß sie 1 bis 100 Gew.-Teile Polycarbonat enthält.

5. Masse nach einem der vorhergehenden Ansprüche, dadurch gekennzeichnet, daß das Polycarbonat ein Zahlenmittel des Molekulargewichts von 20.000 bis 40.000 besitzt.

6. Masse nach einem der vorhergehenden Ansprüche, dadurch gekennzeichnet, daß das Polyglutarimid aus einem imidisierten Polymeren oder Copolymeren von Methylmethacrylat besteht und 50 bis 92 Mol-% der Methacrylatgruppen imidisiert sind.

7. Verfahren zur Verbesserung der Schlagfestigkeit von Polyglutarimid, dadurch gekennzeichnet, daß damit (a) wenigstens zwei Vielstufenpolymerschlagmodifizierungsmittel, wobei die Schlagmodifizierungsmittel kautschukartige Kerne und harte Polymerschalen aufweisen, wenigstens eines der Schlagmodifizierungsmittel einen Kern, der überwiegend aus Butadien polymerisiert worden ist, und wenigstens ein anderes einen Kern besitzt, der überwiegend aus $C_2$—$C_6$-Alkylacrylat polymerisiert worden ist, und (b) Polycarbonat vermischt werden.

8. Verfahren nach Anspruch 7, dadurch gekennzeichnet, daß es auf die Herstellung einer Masse gemäß einem der Ansprüche 2 bis 6 angewendet wird.